## Europäisches Patentamt
## European Patent Office
## Office européen des brevets

(11) Veröffentlichungsnummer: **0 084 197**
**B1**

# EUROPÄISCHE PATENTSCHRIFT

(45) Veröffentlichungstag der Patentschrift:
04.12.85

(51) Int. Cl.⁴: **F 16 H  1/28** // F16H57/02,
F16H57/12, F16H55/18

(21) Anmeldenummer: 82201659.8

(22) Anmeldetag: **24.12.82**

(54) **Planetengetriebe.**

(30) Priorität: **18.01.82  CH 271/82**

(43) Veröffentlichungstag der Anmeldung:
**27.07.83 Patentblatt 83/30**

(45) Bekanntmachung des Hinweises auf die Patenterteilung:
**04.12.85 Patentblatt 85/49**

(84) Benannte Vertragsstaaten:
**CH DE FR GB IT LI SE**

(56) Entgegenhaltungen:
CH - A - 502 535
DE - A - 2 363 106
DE - A - 2 446 172
DE - A - 2 558 093
DE - B - 1 069 975
DE - B - 1 180 596
DE - C - 503 307
DE - C - 506 486
FR - A - 1 416 102
FR - A - 2 335 752
US - A - 2 516 200
US - A - 3 178 966
US - A - 3 315 547

VDI, Band 95, Nr. 6, 21. Februar 1953, Seiten 173,174 W.
WOLFSTIEG: "Stirnräder mit keilförmig ausgebildeten
Zähnen"

(73) Patentinhaber: **Mavilor Systèmes S.A., Grenette,
CH-1700 Fribourg (CH)**

(72) Erfinder: **Ziegler, Rolf, Markgrafenstrasse 42,
D-6907 Nussloch (DE)**
Erfinder: **Hauk, Peter, Sportplatzweg 17,
D-7823 Bonndorf (DE)**

(74) Vertreter: **Jörchel, Dietrich R.A. et al, c/o BUGNION S.A.
Conseils en Propriété Industrielle 10, route de Florissant
Case postale 375, CH-1211 Genève 12 Champel (CH)**

**Beschreibung**

Die Erfindung bezieht sich auf ein Planetengetriebe mit den im Oberbegriff des Anspruchs 1 angegebenen Merkmalen.

Ein derartiges Planetengetriebe ist bekannt (DE-OS 2 558 093) und so aufgebaut, daß der Planetensteg mit den Planetenrädern axial unverrückbar ist, während das Sonnenrad und das Hohlrad axial beweglich sind und durch eine axial wirkende Kraft, insbesondere durch Federn, beaufschlagt werden. Durch die stetig veränderliche Profilverschiebung der Stirnverzahnungen sollen sich die Räder soweit axial ineinanderschieben lassen, bis sie praktisch spielfrei miteinander kämmen, wobei sich Fertigungstoleranzen ausgleichen sollen. Um außerdem einen Lastausgleich zu erzielen, sind die axial beweglichen Räder in geringfügigem Maße auch radial beweglich. Zu diesem Zweck ist das Sonnenrad über eine Kupplungshülse antreibbar, die an beiden Endbereichen Innenverzahnungen hat und in die von der einen Seite her ein am Sonnenrad angeformter Wellenzapfen mit Außenverzahnung und von der anderen Seite her die ebenfalls mit einer Außenverzahnung versehene Antriebswelle eingreifen. Zwischen dieser Antriebswelle und dem Wellenzapfen liegt eine Druckfeder. Durch diese Lagerung ist das Sonnenrad nicht nur relativ zur Antriebswelle bzw. zum Getriebegehäuse axial verschiebbar, sondern soll auch, offensichtlich infolge der geringen elastischen Verformbarkeit der Kupplungshülse, in gewissen Grenzen radial bewegbar sein. In ähnlicher Weise ist das Hohlrad mit einer Außenverzahnung versehen, welche in die Innenverzahnung einer besonderen Kupplungshülse eingreift, die ihrerseits mit der auf einem ringförmigen Gehäusevorsprung angebrachten Außenverzahnung in Eingriff steht.

Bei diesem bekannten Planetengetriebe müssen also ungünstigerweise das Sonnenrad und das große und schwere Hohlrad unter Verwendung besonderer Kupplungshülsen mit Innenverzahnungen axial und radial verschiebbar montiert sein, was einen komplizierten Aufbau bedeutet. Außerdem wird die erwünschte Selbstjustierung dadurch erschwert, daß die schwere Masse des Hohlrades axial und/oder radial bewegt werden muß, und zwar in der Regel in einer raschen periodischen Folge, die von der Umlaufgeschwindigkeit der Planetenräder abhängt. Die dabei erforderlichen periodischen Beschleunigungen einer relativ großen trägen Masse bedeuten unerwünschte Verluste und Beanspruchungen und können zu störenden Schwingungen führen.

Ferner werden mit jeder Kupplungshülse zwei weitere Kraftübertragungen durch Zahneingriffe eingeführt, deren Spiel zu berücksichtigen und auszuschalten ist, wenn die durch die stetig veränderliche Profilverschiebung der Sonnen-, Planeten- und Hohlradverzahnungen angestrebte Spielfreiheit nicht in Frage gestellt werden soll. Außerdem kann ein unvollkommener Rundlauf durch diese bekannte Anordnung kaum ausgeglichen werden. Auch ist der erstrebte vollkommene Lastausgleich insofern offensichtlich nicht erzielbar, als die Abstände zwischen den Planetenrädern bzw. die radialen Lagen aller Planetenräder zueinander festliegen und nicht veränderbar sind. Daher wurden bisher offensichtlich Planetengetriebe der in der DE-OS 2 558 093 beschriebenen Art in der Praxis nicht verwendet.

Das allgemeine Prinzip, bei einer Evolenten-Stirnradverzahnung zwischen zwei miteinander kämmenden Zahnrädern eine über die Zahnbreite kontinuierlich veränderte Profilverschiebung vorzusehen, sowie die daraus resultierenden Vorzüge sind durch die DE-OS 2 446 172 bekannt. Derartige Zahnräder haben auf den ersten Blick das Aussehen von Kegelrädern, weil die Zahnkopf- und die Zahnfußlinien auf Kegelflächen verlaufen, es handelt sich jedoch um Stirnräder, deren Geometrie auf einem Grundzylinder basiert und die daher über die gesamte Zahnbreite einen konstanten Modul haben. Diese Zahnräder sind leichter und billiger als Kegelräder herstellbar und können auf einfachen Stirnradmaschinen nach dem üblichen Abwälzverfahren gefertigt werden, wobei das Werkzeug beim Fräsen eines Zahnprofils mittels einer Kurve entsprechend an den Grundzylinder herangeführt wird. Um die Achsen zweier zusammenwirkender Zahnräder parallel anordnen zu können, müssen sich die Profilverschiebungen an beiden Zahnrädern gegensinnig derart ändern, daß die Summe der Profilverschiebungen unter Berücksichtigung ihrer Vorzeichen für jede Breitenkoordinate des Zahneingriffs den gleichen Wert haben.

Es sind auch Planetengetriebe mit schräg verzahnten Rädern bekannt (DE-OS 2 363 106), bei denen die Planetenräder axial federnd auf den Stegachsen gelagert sind. Dadurch soll bei normalen Fertigungstoleranzen eine Leistungsverzweigung erreicht werden. Die radial nicht nachgiebigen Planetenräder sind dabei mit zwei gegenläufig schrägen Verzahnungen versehen, was die Herstellung erschwert und die axiale Abmessung vergrößert.

Andererseits sind Planetengetriebe bekannt, bei denen zur Erzielung einer möglichst gleichmäßigen Lastverteilung die Planetenräder kugelig bzw. auf Pendellagern gelagert sind (DE-PS 503 307 und US-PS 3 178 966).

Trotz der Vielfalt bekannter Planetengetriebe, die aufgrund ihres raumsparenden und kompakten Aufbaus, der koaxial liegenden Antriebs- und Abtriebswellen und der in einfacher Weise erzielbaren unterschiedlichsten Untersetzungsverhältnisse vielseitig und häufig eingesetzt werden, mußte jedoch bisher auf ihre Anwendung überall dort verzichtet werden, wo es auf eine praktisch spielfreie Bewegungsübertragung ankommt. Das gilt vor allem für Stellantriebe, insbesondere für Nachlauf-Steuerungen und -Regelungen, mit denen ganz genaue Positionierungen erreicht werden müssen, wie zum Beispiel in der Handhabungstechnik, vor allem für den Antrieb von Industrierobotern, ferner für die numerische Steuerung von Präzisionswerkzeugmaschinen, für die Lagesteuerung von astronomischen Beobachtungsinstrumenten und dergleichen. Hierbei kann bereits ein Flankenspiel des Getriebes von nur wenigen Bogenminuten zu nicht annehmbaren Lagefehlern führen. Daher werden für solche Anwendungen bisher dem jeweiligen Zweck angepaßte spielarme oder praktisch spielfreie Spezialgetriebe eingesetzt, die jedoch teuer und konstruktiv aufwendig sind, wie beispielsweise Cycloidenscheibengetriebe, Spezial-Stirnradgetriebe mit genau selektierten Rädern, Stirnradgetriebe mit Torsionsverspannung oder dergleichen. Das letztgenannte Getriebe hat außerdem den Nachteil, daß es wegen der Torsionsverspannung in Umfangsrichtung elastisch federt, was vor allem bei starken Beschleunigungen und rasch wechselnden Drehrichtungen zu unannehmbaren Vibrationen führen kann.

Der Erfindung liegt die Aufgabe zugrunde, ein Planetengetriebe mit den im Oberbegriff des Patentanspruchs 1 angegebenen Merkmalen so auszubilden, daß, bei einfachem Aufbau und ohne die Notwendigkeit einer Präzisionsbearbeitung, einerseits das mechanische Flanken- oder Eingriffsspiel praktisch vollkommen unterdrückt wird und andererseits Ungenauigkeiten des Rundlaufs selbstätig kompensiert werden und auch bei größeren Verzahnungstoleranzen alle Planetenräder stets gleichzeitig in optimaler Weise mit dem Sonnenrad und dem Hohlrad im Eingriff stehen, so daß eine gleichmäßige Verteilung der Belastung und der zu übertragenden Kräfte gewährleistet ist.

Diese Aufgabe wird erfindungsgemäß durch die im Kennzeichen des Patentanspruchs 1 angegebenen Merkmale gelöst.

Ein solches Planetengetriebe nach der Erfindung hat einen sehr einfachen und stabilen Aufbau. Alle Räder können mit konventionellen Abwälzfräsern und Maschinen hergestellt werden und erfordern keine hohe Bearbeitungspräzision; insbesondere sind keine geschliffenen Räder erforderlich. Diese einfache Herstellung in Verbindung mit der einfachen Montage erlaubt eine sehr preisgünstige Fertigung, so daß erstmals preiswerte, praktisch spielfreie Planetengetriebe mit einem Flankenspiel von weniger als einer Bogenminute und mit praktisch vollkommenem Lastausgleich zur Verfügung stehen, welche in Anwendungen, die eine sehr hohe Positionsgenauigkeit erfordern, die bisher notwendigen kostspieligen Spezialgetriebe ersetzen können. Wären die Planetenräder nur axial vorgespannt, ohne radial nachgiebig zu sein, würden sie bei ungenauer Ausrichtung der Getrieberäder oder bei nicht perfektem Rundlauf momentan nur mit jeweils einem der anderen Räder, Hohlrad oder Sonnenrad, fest in Eingriff gedrückt werden, während der Eingriff mit dem anderen Rad mehr oder weniger locker wäre, was ein Spiel zwischen Sonnenrad und Hohlrad zur Folge hätte.

Wenn andererseits die Planetenräder nur auf Pendellagern säßen und nicht auch axial verschiebbar wären, könnten sie sich bei einem Kippen festklemmen.

Nur wenn erfindungsgemäß jedes Planetenrad individuell axial angestellt und aufgrund seiner pendelnden Lagerung individuell in gewissen Grenzen um senkrecht zur Planetenradachse orientierte Achsen kippbar ist und ferner eine ballige Verzahnung, das heißt in Achsrichtung abgerundete Zahnflanken, aufweist, können alle Planetenräder infolge der erwähnten Freiheitsgrade unter der Wirkung der geeignet gewählten axialen Anstellkraft so weit und so stark in die Verzahnungen des Sonnenrades und des Hohlrades eingreifen, daß sich stets selbsttätig eine praktisch vollkommene Spielfreiheit einstellt. Dabei werden Fertigungstoleranzen, Verzahnungsfehler und Ungenauigkeiten des Rundlaufs, die vor allem infolge einer Deformation oder einer nicht exakten Konzentrizität des Hohlrades auftreten können, automatisch kompensiert. Da jedes Planetenrad zwangsweise im vollkommenen Eingriff mit den Verzahnungen des Sonnenrades und des Hohlrades gehalten wird, ist auch ein exakter Lastausgleich gewährleistet. Die mittleren Radien und der Grad der Balligkeit der Verzahnungen werden so gewählt, daß die Berührungspunkte zusammenwirkender Zahnflanken wenigstens näherungsweise in der Mitte der Zahnbreiten liegen. Durch die Balligkeit der Verzahnung entfällt die Notwendigkeit einer exakten axialen Ausrichtung der Räder, und man vermeidet sogenannte Kantenläufer.

Um insbesondere bei höheren Drehzahlen den Zahneingriff geschmeidiger zu machen und die Ausgleichsbewegung der Planetenräder unter der Wirkung momentan auftretender ungleichförmiger Kräft zu beschleunigen, kann es vorteilhaft sein, die Zähne der Planetenräder und/oder des Sonnenrades und/oder des Hohlrades zwecks Erhöhung der Elastizität mit radialen Schlitzen zu versehen.

Der Kegelwinkel der die Zahnköpfe aller Räder einhüllenden Kegel beträgt vorteilhafterweise zwischen 6° und 15°, insbesondere etwa 10°.

Die Räder des Planetengetriebes nach der Erfindung haben vorzugsweise normale Evolentenverzahnungen.

Die Erfindung wird anhand der Zeichnungen an einem Ausführungsbeispiel näher erläutert. Es zeigt

Fig. 1 eine schematische Seitenansicht eines Planetengetriebes nach der Erfindung mit drei Planetenrädern,

Fig. 2 einen Schnitt längs der Linie II in vergrößerter Darstellung,

Fig. 3 eine Teilansicht der zusammenwirkenden Verzahnungen des Sonnenrades und eines Planetenrades in Richtung des Pfeils III nach Fig. 2,

Fig. 4 eine schematische Draufsicht auf die Stirnseiten zweier zusammenwirkender Zähne des Sonnenrades und eines Planetenrades und

Fig. 5 eine Abwandlung mit radial geschlitzten Zähnen der Planetenräder und des Sonnenrades.

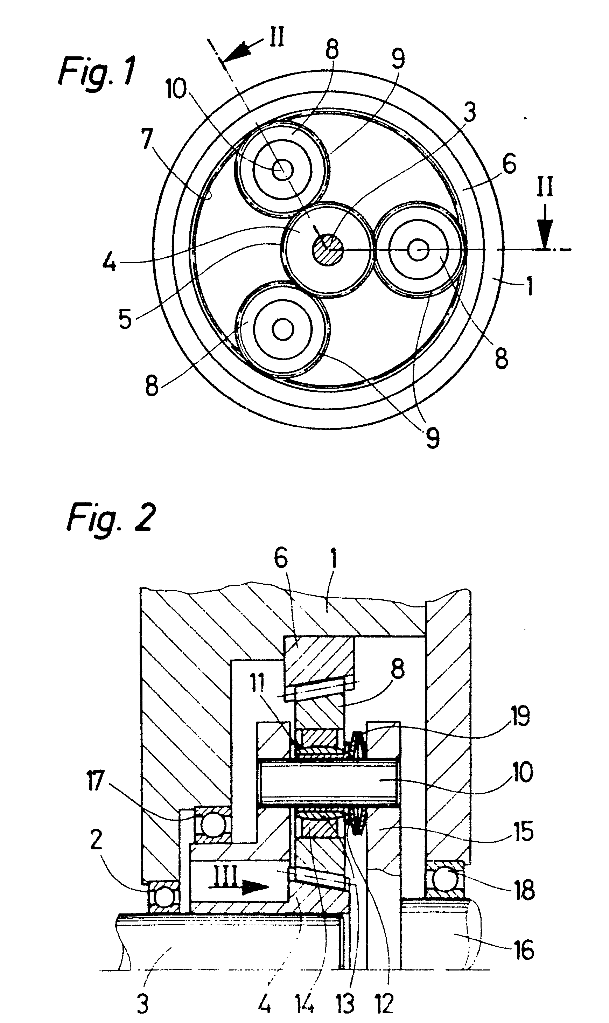

Nach den Fig. 1 und 2 ist im Gehäuse 1 des Planetengetriebes mittels eines Kugellagers 2 eine erste Welle 3 drehbar gelagert, die axial unverschiebbar ist. Auf dieser Welle 3 ist drehfest und axial unverschiebbar das Sonnenrad 4 mit seiner Verzahnung 5 befestigt. Konzentrisch zur Welle 3 mit ihrem Sonnenrad 4 ist im Gehäuse 1 unbeweglich ein Hohlrad 6 mit seiner Innenverzahnung 7 befestigt. Zwischen dem Sonnenrad 4 und dem Hohlrad 6 sind nach Fig. 1 gleichmäßig verteilt drei Planetenräder 8 mit ihren Verzahnungen 9 angeordnet, die sowohl mit dem Sonnenrad 4 als auch mit dem Hohlrad 6 kämmen. Jedes Planetenrad 9 ist axial verschiebbar und mittels eines Pendellagers 11 in bestimmten Grenzen kippbar auf seiner Planetenradwelle 10 gelagert. Alle Planetenradwellen 10 werden vom gemeinsamen Planetensteg 15 getragen, an welchem, koaxial zur ersten Welle 3, eine zweite Welle 16 befestigt ist. Der Planetensteg 15 und die an ihm befestigte Welle 16 sind axial unverschiebbar mittels Kugellagern 17 und 18 drehbar im Gehäuse 1 gelagert.

Bei dem beschriebenen Planetengetriebe handelt es sich vorzugsweise um ein direkt an einem Stellmotor angebautes Untersetzungsgetriebe, wobei die Welle 3 die Antriebswelle, also die Motorwelle oder eine mit der Motorwelle gekuppelte Eingangswelle ist, während die dazu koaxiale Welle 16 die Abtriebswelle darstellt. Mit einem derartigen Planetengetriebe läßt sich ein gewünschtes Untersetzungsverhältnis innerhalb eines weiten Untersetzungsbereiches verwirklichen, insbesondere auch ein verhältnismäßig kleines Untersetzungsverhältnis, was sich mit spielarmen oder spielfreien Getrieben herkömmlicher Bauart häufig nicht oder nur konstruktiv umständlich erreichen läßt.

Im betrachteten Beispiel besteht das Pendellager 11 aus einer auf der betreffenden Planetenradwelle 10 frei drehbaren und axial verschiebbaren Lagerhülse 12, einem auf dieser sitzenden, außen kugelförmig gekrümmtem Lagerkopf 13, welcher eine Art Gelenkkugel bildet, und dem äußeren, das Planetenrad 8 tragenden Lagerring 14, der mit seinem angepaßten hohlkugelförmigen Innenumfang auf dem Lagerkopf 13 sitzt. Der Lagerring 14 kann daher nach Art einer Kugelgelenkpfanne auf dem Lagerkopf 13 gleiten und ist somit in gewissen Grenzen verschwenkbar, so daß das Planetenrad 8 um eine zur Planetenradwelle 10 senkrecht orientierte Achse innerhalb eines bestimmten Winkels kippen kann.

Das Sonnenrad 4, die Planetenräder 8 und das Hohlrad 6 sind Stirnräder und haben eine Evolenten-Verzahnung mit in Achsrichtung, also über die Zahnbreite, stetig variierender Profilverschiebung, die sich beim Sonnenrad 4 und beim Hohlrad 6 von einer positiven Verschiebung auf der Antriebsseite zu einer negativen Verschiebung auf der Abtriebsseite der Räder ändert und bei den Planetenrädern 8 im umgekehrten Sinne variiert. Dabei hat die Summe der Profilverschiebungen zweier miteinander kämmender Räder unter Berücksichtigung der Vorzeichen an jedem Eingriffspunkt über die ganze Zahnbreite stets denselben Wert. Die Spitze des durch die Zahnkopflinien des Sonnenrades 4 gehenden Kegels liegt daher nach Fig. 2 auf der Abtriebsseite, während sich die betreffenden Kegelspitzen für die Planetenräder 8 und das Hohlrad 6 auf der Antriebsseite befinden. Die Kegelwinkel liegen zwischen minimal 6° und maximal 15°, vorzugsweise bei etwa 10°. Bei Kegelwinkeln unter etwa 6° besteht die Gefahr einer Selbsthemmung derart, daß die Planetenräder 8 nicht mehr unter der Wirkung einer radial nach innen auf sie ausgeübten Kraft, die beispielsweise von einem Rundlauffehler herrührt, eine axiale Ausweichbewegung ausführen, die also in der Darstellung nach Fig. 2 nach rechts, zur Abtriebsseite hin, gerichtet ist.

Zwischen jedem Planetenrad 8 und dem auf der divergierenden Seite des Planetenradkegels liegenden Abschnitts des Planetenstegs 15 ist als elastisches Andruckorgan 19 eine Tellerfeder oder auch ein Tellerfederpaket auf der Planetenradwelle 10 angeordnet. Jedes der elastischen Andruckorgane 19, die sich gegen einen Ringflansch der Lagerhülse 12 abstützen, beaufschlagt das betreffende Planetenrad 8 mit einer vorgebbaren Axialkraft derart, daß es bis zum vollkommen spielfreien Eingriff in die Verzahnungen 5 und 7 des Sonnenrades 4 und des Hohlrades 6 eingeschoben wird, wobei die pendelnde Aufhängung eine individuelle Selbstjustierung jedes Planetenrades 8 erlaubt.

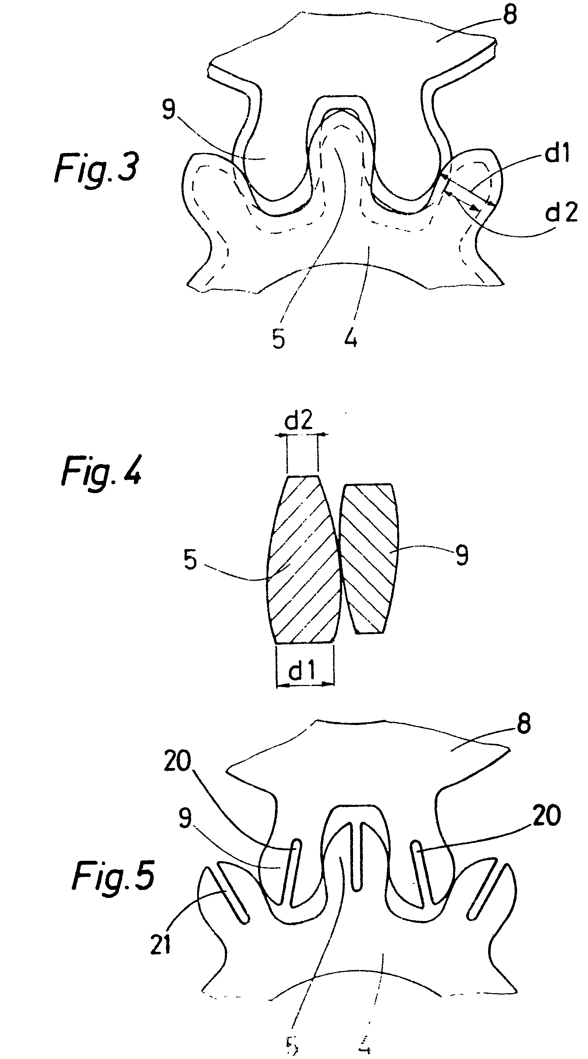

Eine veränderliche Profilverschiebung ist schematisch für einen typischen Fall in Fig. 3 skizziert, welche eine Teilansicht in Richtung des Pfeils III nach Fig. 2 der zusammenwirkenden Verzahnungen 5 und 9 des Sonnenrades 4 und eines Planetenrades 8 zeigt; hierbei sind die Querschnittsprofile der Zähne auf der Antriebsseite mit vollen Linien und die auf der Abtriebsseite gestrichelt gezeichnet. Danach verjüngt sich das auf der Antriebsseite ziemlich dicke Querschnittsprofil der Zähne der Sonnenradverzahnung 5 von der Zahndicke $d_1$, unter gleichzeitiger Änderung der Zahnprofile, bis auf eine Zahndicke $d_2$ auf der Abtriebsseite; die Verjüngung und die Profiländerung der Zähne der Planetenradverzahnung 9 verlaufen in umgekehrter Richtung. Dadurch kann das Querschnittsprofil an der verjüngten Seite der Zähne, wie in Fig. 3 angedeutet, etwas unterschnitten sein.

Außerdem weisen die Verzahnungen aller Räder eine Balligkeit auf, wie schematisch in Fig. 4 veranschaulicht, welche eine Draufsicht auf die Stirnseiten zweier zusammenwirkender Zähne der Sonnenradverzahnung 5 und der Planetenradverzahnung 9 zeigt. In an sich bekannter Weise sind die Zahnflanken in Richtung der Zahnbreite ballig, das heißt konvex gewölbt, ausgebildet, so daß der exakte Eingriff gegenüber kleinen Verzahnungs- und Montagefehlern unempfindlich ist und ein Kantenlaufen vermieden wird. In Fig. 4 sind ferner die bereits in Fig. 3 eingezeichneten Zahndicken d1 und d2 der Planetenradverzahnung 5 auf der Antriebsseite bzw. auf der Abtriebsseite angegeben.

Die beschriebene Ausbildung des Planetengetriebes nach der Erfindung, welches mit konventionellen Maschinen, beispielsweise mit normalen Fräsmaschinen, preisgünstig herstellbar ist, verleiht den Planetenrädern, bei axial unverschiebbarem Sonnenrad, Hohlrad und Planetensteg, Freiheitsgrade der Orientierung derart, daß sie zwangsläufig auch bei Verzahnungs- und Montagefehlern sowie bei ungenauem Rundlauf im optimalen Eingriff gehalten werden und damit sowohl eine praktisch absolute Spielfreiheit als auch eine vollkommen gleichmäßige Lastverteilung gewährleisten. Außerdem haben Planetenräder im allgemeinen eine kleinere Masse als das Hohlrad, was natürlich eine Selbstjustierung erleichtert.

Bei einem typischen Planetengetriebe nach der Erfindung, das als Untersetzungsgetriebe direkt an einen 4 bis 6 kW-Stellmotor mit einer Motordrehzahl von 3000 U/min angebaut werden kann, beträgt der Durchmesser der Innenverzahnung 7 des Hohlrades 6 zum Beispiel 135 mm, und die Durchmesser des Sonnenrades 4 und der drei Planetenräder 8 sind ungefähr gleich groß. Bei der Abgabe eines Motordrehmoments von 13 bis 14 Nm kann die Federkraft der Tellerfedern 19 typischerweise etwa 1 kg betragen, wobei der Kegelwinkel aller Räder des Getriebes bei etwa 10° liegt. Das gemessene Flankenspiel eines derartigen Planetengetriebes wurde zu weniger als eine Bogenminute bestimmt.

Gegebenenfalls kann es, insbesondere für den Betrieb bei höheren Drehzahlen, vorteilhaft sein, die Zähne der Planetenräder und/oder des Sonnenrades und/oder des Hohlrades mit radialen, an den Zahnspitzen mündenden Schlitzen zu versehen, wodurch eine gewisse Elastizität der durch die Schlitze unterteilten Zahnabschnitte erreicht bzw. die Elastizität der Zähne vergrößert wird. Im schematisch skizzierten Beispiel nach Fig. 5, die sonst der Fig. 3 entspricht, haben die Zähne 9 der Planetenräder 8 radiale Schlitze 21 und die Zähne 5 des Sonnenrades 4 radiale Schlitze 20. Eine auf diese Weise erzeugte oder erhöhte elastische Nachgiebigkeit der Zähne erleichtert und beschleunigt die selbsttätigen raschen axialen und/oder radialen Ausgleichsbewegungen der Planetenräder 8 unter der momentanen Wirkung ungleichmäßiger und wechselnder Kräfte, wie sie von Fertigungstoleranzen und ungenauen Ausrichtungen der Räder herrühren. Die erwähnten Freiheitsgrade der Planetenräder 8 werden somit noch durch die Freiheitsgrade einer geringen elastischen Deformierbarkeit der geschlitzten Zahnabschnitte erhöht, wodurch auch bei höheren Drehzahlen ein gleichmäßiger optimaler Zahneingriff begünstigt wird.

Die Erfindung ist nicht auf das beschriebene Ausführungsbeispiel beschränkt, sondern läßt insbesondere hinsichtlich der Ausbildung der Pendellager, für welche auch Pendelkugellager verwendet werden können, der Art der Andruckorgane für die Planetenräder sowie der Zahl der Planetenräder mannigfache Varianten zu.

## Patentansprüche

1. Planetengetriebe mit einem Sonnenrad (4), das drehfest mit einer ersten, drehbar im Getriebegehäuse gelagerten Welle (3) verbunden ist, einem zum Sonnenrad konzentrischen Hohlrad (6) und mindestens zwei Planetenrädern (8), die mit dem Sonnenrad und mit dem Hohlrad kämmen und untereinander durch den Planetensteg (15) verbunden sind, welcher drehfest auf einer zweiten, drehbar im Getriebegehäuse gelagerten und zur ersten Welle koaxialen Welle (16) sitzt, wobei die Stirnverzahnungen aller Räder eine stetig über die Zahnbreite veränderte Profilverschiebung aufweisen und bei miteinander kämmenden Rädern sich diese Profilverschiebungen über die Zahnbreite gegensinnig ändern, und wobei wenigstens ein Rad axial anstellbar und radial beweglich ist, dadurch gekennzeichnet, daß die Planetenräder (8) einzeln und unabhängig voneinander axial durch zwischen ihnen und dem Planetensteg (15) angeordnete, eine elastische Axialkraft ausübende Andruck-Organe (19), insbesondere Tellerfedern, anstellbar und zwecks radialer Beweglichkeit mittels Pendellagern (11) auf ihren Planetenradwellen (10) kippbar gelagert sind, daß alle Räder ballige Verzahnungen aufweisen und daß das Sonnenrad (4) und der Planetensteg (15) axial unverschiebbar auf ihren Wellen (3, 16) und das Hohlrad (6) unbeweglich im Getriebegehäuse (1) befestigt sind.

2. Planetengetriebe nach Anspruch 1, dadurch gekennzeichnet, daß die Pendellager (11) aus einer axial auf der Planetenradwelle (10) verschiebbaren Lagerhülse (12), einem auf dieser sitzenden kugelförmig gekrümmten Lagerkopf (13) und einem darauf gleitbaren, mit seinem Innenumfang dem Lagerkopf (13) angepaßten Lagerring (14) bestehen.

3. Planetengetriebe nach Anspruch 1 oder 2, dadurch gekennzeichnet, daß die Zähne der Planetenräder (8) und/oder des Sonnenrades (4) und/oder des Hohlrades (6) zur Erhöhung ihrer Elastizität mit einem radial gerichteten Schlitz (20, 21) versehen sind.

4. Planetengetriebe nach Anspruch 1, dadurch gekennzeichnet, daß der Kegelwinkel der die Zahnköpfe aller Räder (4, 6, 8) einhüllenden Kegel zwischen 6° und 15° beträgt.

## Claims

1. An epicyclic gear comprising a sun wheel (4) fixed to a first shaft (3) rotatably mounted in the gear casing, a hollow wheel (6) having internal teeth concentric with said sun wheel, and at least two planet wheels (8) meshing with said sun wheel and said hollow wheel, and interconnected by a planet carrier (15) fixed to a second shaft (16) coaxial with said first shaft and rotatably mounted in the gear casing, wherein the spur teeth of all wheels have a profile correction that changes continuously along the tooth width, in each pair of meshing wheels this correction is changing in opposite directions along the tooth width, and wherein at least one wheel is axially biased and radially movable, characterized in that the planet wheels (8) are on the one hand biased separately and independently of one another in the axial direction by pressure members (19), notably cup springs, exerting a resilient axial force and disposed between said planet wheels and the planet carrier (15), and on the other hand allowed to move radially on their planet-wheel stub shafts (10) by being oscillatably mounted on pendulum bearings (11), all the wheels comprising crowned teeth, the sun wheel (4) and the planet carrier (15) being axially fixed to their shafts (3, 16), the hollow wheel (6) being immovably fixed to the gear casing (1).

2. The epicyclic gear of claim 1, characterized in that the pendulum bearings (11) consist each of a bearing sleeve (12) adapted to slide axially on the planet-wheel stub shaft (10), of a convex part-spherical bearing ring (13) fitted on said sleeve and of an outer bearing ring (14) formed with a part-spherical inner surface corresponding to said bearing ring (13) and adapted to slide on it.

3. The epicyclic gear of claims 1 or 2, characterized in that the teeth of the planet wheels (8) and/or the sun wheel (4) and/or the hollow wheel (6) are each provided with a radially directed slit (20, 21) in order to improve their inherent resiliency.

4. The epicyclic gear of claim 1, characterized in that the cone angle of the cone enveloping the tooth tips of all wheels (4, 6, 8), has a value within the range of 6° to 15°.

**Revendications**

1. Engrenage planétaire comprenant un planétaire fixé à un premier arbre monté rotatif dans la boite d'engrenage, une couronne (6) concentrique avec le planétaire et au moins deux satellites (8) engrenant avec le planétaire et la couronne, et reliés entre eux par un porte-satellites (15) solidaire en rotation d'un second arbre (16) monté rotativement dans la boite d'engrenage et coaxial au premier arbre, les dents de tous les mobiles de l'engrenage étant pourvues d'une correction de profil variant de manière continue le long de la largeur des dents, cette correction variant en sens opposé le long de la largeur des dents pour les dentures engrenant entre elles, au moins l'un des mobiles de l'engrenage étant applicable axialement sous contrainte contre les autres et mobile radialement, caractérisé par le fait que les satellites (8) sont d'une part déplaçables séparément et indépendamment l'un de l'autre dans la direction axiale et applicables, sous contrainte, contre le planétaire et la couronne par un organe de pression (19) en particulier des ressorts Belleville exerçant un force élastique axiale et disposés entre les satellites et le porte-satellites (15) et d'autre part montés oscillants sur des paliers à rotule (11) sur leurs tourillons (10) afin d'être mobiles radialement, que tous les mobiles et la couronne de l'engrenage présentent des dents bombées, que le planétaire (4) et le porte-satellite (15) sont montés fixes axialement sur leurs arbres (3, 16) et que la couronne (6) est montée fixe en rotation dans la boite d'engrenage (1).

2. Engrenage planétaire selon la revendication 1, caractérisé par le fait que chaque palier à rotule (11) comprend une douille (12) susceptible de se déplacer axialement sur le tourillon (10) de satellite, une bague interne (13) présentant une surface sphérique convexe, chassée sur la douille et une bague extérieure (14) présentant une surface intérieure adaptée à la bague intérieure (13) et susceptible de glisser sur celle-ci.

3. Engrenage planétaire selon la revendication 1, caractérisé par le fait que les dents des satellites (8) et/ou du planétaire (4) et/ou de la couronne (6) sont chacune pourvue d'une fente (20, 21) dirigée radialement afin d'améliorer leur élasticité propre.

4. Engrenage planétaire selon la revendication 1, caractérisé par le fait que l'angle du cône enveloppant les sommets de tous les mobiles (4, 8) de la couronne (6) a une valeur comprise entre 6° et 15°.

**Fig. 1**

**Fig. 2**

*Fig.3*

*Fig.4*

*Fig.5*

9